# EUROPÄISCHE PATENTSCHRIFT

(11) **EP 3 068 989 B1**
(45) Veröffentlichungstag und Bekanntmachung des Hinweises auf die Patenterteilung: **09.08.2017**
(21) Anmeldenummer: 14796110.6
(22) Anmeldetag: 11.11.2014
(51) Int. Cl.: F01N 3/28, F01N 3/033, F01N 3/035, F01N 13/00, F01N 3/10, F01N 3/20, F01N 13/18, F01N 3/021

(54) **ABGASNACHBEHANDLUNGSSYSTEM**
EXHAUST GAS AFTERTREATMENT SYSTEM
SYSTÈME DE POST-TRAITEMENT DE GAZ D'ÉCHAPPEMENT

(30) Priorität: 15.11.2013 DE 102013223313
(43) Veröffentlichungstag der Anmeldung: 21.09.2016
(73) Patentinhaber: ROBERT BOSCH GMBH, 70442 Stuttgart (DE)
(72) Erfinder: BRESSLER, Harald, 67368 Westheim (DE); OSEMANN, Christoph, 76227 Karlsruhe (DE); BECKER, Carsten, 71394 Kernen I.R. (DE)
(86) Internationale Anmeldenummer: PCT/EP2014/074220
(87) Internationale Veröffentlichungsnummer: WO 2015/071233

(56) Entgegenhaltungen:
- EP-A1- 1 716 917
- WO-A2-2009/024815
- GB-A- 2 481 996
- US-A1- 2011 219 745
- Manuel Hesser ET AL: "SCR Technology for NOx Reduction: Series Experience and State of Development", DEER Conference, 25. August 2005 (2005-08-25), XP055162878, Gefunden im Internet: URL:http://energy.gov/sites/prod/files/201 4/03/f9/2005_deer_hesser.pdf [gefunden am 2015-01-16]

## Beschreibung

Die Erfindung betrifft ein Abgasnachbehandlungssystem zur Reinigung von Abgas aus einer Verbrennungskraftmaschine, umfassend einen Partikelfilter mit einer katalytischen Oxidationsfunktion und mindestens eine Mischkammer, lösbar miteinander zusammengefasst zu einer baulichen Einheit und ein entsprechendes Verfahren zur Abgasnachbehandlung.

### Stand der Technik

Verbrennungskraftmaschinen, insbesondere dieselbetriebene Kraftfahrzeuge, stoßen eine komplexe Mischung von Luftverunreinigungen aus, welche Partikel bzw. Feinstoffe und gasförmige Verbindungen umfassen, unter anderem Stickstoffoxide (NOₓ), Kohlenmonoxid (CO) und unverbrannte Kohlenwasserstoffe (HC). Aufgrund nun mehr herrschender strengerer Abgasemissionsstandards werden Anstrengungen unternommen, die Menge an Luftverunreinigungen, die durch eine Verbrennungskraftmaschine ausgestoßen werden, zu regeln.
Unter anderem wird in Abgasnachbehandlungssystemen neben einem Oxidationskatalysator und einem Rußpartikelfilter eine selektive katalytische Reduktion (SCR= selective catalytic reduction) eingesetzt, um die strengen Abgasbestimmungen hinsichtlich des NOₓ-Anteils im Abgas zu erfüllen. Ein Reduktionsmittel, welches in den Abgasstrom eingespritzt wird, üblicherweise Harnstoff oder eine Wasser/Harnstofflösung, zersetzt sich in Ammoniak, der mit dem im Abgas enthaltenen Stickstoffoxid unter Bildung von Wasser und Stickstoff in Anwesenheit eines Katalysators reagiert.
Per se sind beschichtete Partikelfilter mit katalytischer Oxidationsfunktion bekannt, wobei katalytisches Material in Form einer Beschichtung oder in anderer Weise enthalten ist. Entsprechende Katalysatoren sind geeignet, unverbrannte gasförmige und nicht-flüchtige Kohlenwasserstoffe und Kohlenmonoxid in großem Maße in Kohlenstoffdioxid und Wasser zu oxidieren. Ferner kann ein Anteil der vorhandenen Stickstoffoxide (NOₓ) an dem Oxidationskatalysator in NO₂ oxidiert werden. Der in Form von Rußpartikeln im Partikelfilter abgeschiedene Kohlenstoff kann mit dem Stickstoffdioxid zu CO₂ umgewandelt werden. Dieser Vorgang ist als "passive Regeneration" bekannt. Ein erhöhter Anteil an NO₂ im Abgas begünstigt eine nachfolgende Reduktion der Stickstoffoxide (NOₓ) im Vergleich zu einem geringeren Anteil.

WO 1999/039809 bezieht sich auf ein System zur selektiven katalytischen Reduktion (SCR) zur Behandlung von NOₓ und Feststoffteilchen enthaltendem Verbrennungsabgas, wobei in Kombination und in dieser Reihenfolge ein Oxidationskatalysator, ein Feinstofffilter, eine Quelle für das Reduktionsmittel, eine Einspritz-Vorrichtung für das Reduktionsmittel und ein SCR-Katalysator angeordnet sind. Ein eingesetzter Oxidationskatalysator, auch bezeichnet mit DOC = diesel oxidation catalyst, begünstigt die Umwandlung von HC- und CO-Verunreinigungen des Abgases und zumindest teilweise eine Oxidation der Feinstoffe in Wasser und Kohlenstoffdioxid. Ferner unterstützt der Oxidationskatalysator die Oxidation von mindestens einem Teil des Stickstoffmonoxids des Abgases in Stickstoffdioxid. Ein höherer Anteil an NO₂ im Abgas unterstützt die Umwandlung von NOₓ an einem SCR-Katalysator und bewirkt eine passive Regeneration des Partikelfilters, wobei abgeschiedene Feinstoffteilchen oxidiert werden. Nachteilig sind der große Raumbedarf der Komponenten des Abgasnachbehandlungssystems und insbesondere die Anordnung der einzelnen Komponenten stromaufwärts des SCR-Katalysators. Zusätzlich ergibt sich durch die voluminöse und lange Anordnung der Anlage eine größere Entfernung zur Verbrennungskraftmaschine und letztlich eine geringere Temperatur am SCR-Katalysator. Insbesondere bei einer dynamischen Betriebsweise wird so verhindert, dass frühzeitig Reduktionsmittel zudosiert wird, da eine Dosierung erst ab einer bestimmten Betriebstemperatur am SCR-Katalysator erfolgen kann. Demnach stellt eine Anordnung von Oxidationskatalysator, Feinstofffilter und SCR-Katalysator eine große thermische Masse dar, welche Wärmeverluste und durch die Vielzahl an Komponenten einen nicht unerheblichen Kostenaufwand verursacht.

DE 10 2012 015 840 A1 offenbart ein Nachbehandlungssystem für Abgas aus einem Verbrennungsmotor, welches in einer Behandlungsvorrichtung einen Partikelfilter mit einem SCR-Katalysator kombiniert. Eine derartige Kombination wird unter anderem mit CDS, SDPF, SCRoF oder ähnliches abgekürzt, wobei auf einem Partikelfiltersubstrat ein SCR-Katalysator angeordnet ist. Der CDS-Katalysator erfüllt sowohl eine Partikelfallenfunktion als auch SCR-Funktionen. Allerdings ist in einer derartigen Kombination eine hohe Beladung des Filtersubstrats mit einer SCR-Katalysatorzusammensetzung erforderlich, welche zu einem nicht akzeptablen hohen Druckverlust führen kann. Ferner werden an die Katalysatorzusammensetzung hohe thermische Anforderungen gestellt, um auch den hohen Temperaturen einer Partikelfilterregeneration zu widerstehen. Das beschriebene Nachbehandlungssystem wird ferner ergänzt von einem zweiten Reinigungskatalysator, beispielsweise ausgeführt als Dieseloxidationskatalysator und/oder SCR-Katalysator. Als problematisch für ein derartiges System erweist sich der erforderliche Einbauraum, insbesondere die Einbaulänge. Die Einbaulänge wird maßgeblich durch die Länge einer Mischstrecke bestimmt, welche notwendig ist, um das eingespritzte Reduktionsmittel ausreichend mit dem Abgas zu vermischen. Die damit verbundenen Wärmeverluste sind hoch. Darüber hinaus unterstützt ein derartiges System nicht die passive Regeneration des Filtersubstrats.
WO 2012/05672 A1 beschreibt einen Abgasstrang eines Verbrennungsmotors mit einem Entkopplungselement zwischen einer heißen Abgasleitung und einer kalten Abgasleitung zur Kompensation von Vibrationen und einer Stickstoffoxid-Behandlungsvorrichtung. Ferner ist eine Einspritzvorrichtung für ein entsprechendes Reduktionsmittel und eine Mischeinrichtung zum Vermischen des Abgases mit dem Reduktionsmittel vorgesehen, welche eine Einheit bilden, die mit dem Entkopplungselement verbunden ist. WO 2009/024815 offenbart ein Abgasnachbehandlungssystem mit einem Partikelfilter mit katalytischer Oxidationsfunktion und einer Mischkammer, die zu einer baulichen Einheit zusammengefasst sind.

US 2011/219745 beschreibt ein Abgasnachbehandlungssystem mit einem Oxidationskatalysator, einem Partikelfilter und einer Mischkammer, die ebenfalls zu einer baulichen Einheit zusammengefasst sind.

### Offenbarung der Erfindung

Erfindungsgemäß wird ein Nachbehandlungssystem zur Reinigung eines Abgases, enthaltend zumindest Stickstoffoxide und Rußpartikel aus einer Verbrennungskraftmaschine vorgeschlagen, das dadurch charakterisiert ist, dass ein Partikelfilter, eine Vorrichtung mit katalytischer Oxidationsfunktion und mindestens eine in Strömungsrichtung des Abgases dem Partikelfilter nachfolgende Mischkammer in einer baulichen Einheit zusammengefasst sind. Ferner wird ein Verfahren zur Abgasnachbehandlung vorgeschlagen, welches das Nachbehandlungssystem verwendet.
Der Partikelfilter und die Vorrichtung mit katalytischer Oxidationsfunktion können räumlich getrennt angeordnet sein, beispielsweise auf getrennten Elementen bereitgestellt werden oder in einer Ausführungsform als ein Partikelfilter mit katalytischer Oxidationsfunktion vorgesehen sein.

Ein Partikelfilter mit einer Oxidationskatalysatorfunktion ist dahingehend konfiguriert, um Partikelfallenfunktionen und eine Umwandlung von im Abgas vorhandenen Schadstoffen auszuführen, sowie eine Regeneration des Partikelfilters zu ermöglichen. Partikelfilter weisen im Allgemeinen eine Struktur, bzw. einen Träger auf, beispielsweise in Form eines Wabenträgers mit einer Vielzahl von wechselseitig geschlossenen Kanälen, die derart ausgeführt sind, dass Partikel enthaltendes Abgas durch poröse Wände des Trägers strömt, wobei sich die Partikel in Poren ablagern.
Als Strukturen oder Träger für katalytische Schichten können beispielsweise wabenförmige Wanddurchflussfilter oder wabenförmige Katalysatorträger z. B. aus Keramik eingesetzt werden. Auch metallische Träger sind möglich. Die Struktur des Partikelfilters mit katalytischer Oxidationsfunktion muss insbesondere als wesentliche Eigenschaft die gewünschte Partikelfilterwirkung erlauben und eine katalytische Aktivität ermöglichen, die dem Filter die gewünschte Oxidationsfunktion verleiht. Als wesentliche Eigenschaft dieser Oxidationsfunktion werden nicht- oder teiloxidierte Kohlenwasserstoffe und Kohlenmonoxid, die im Abgas enthalten sind oder bei der Oxidation von Partikeln mit Sauerstoff im Abgasstrang entstehen, zum Beispiel nach gezielter Temperaturerhöhung im mit Partikel beladenen Filter, zumindest teilweise zu CO₂ und Wasser oxidiert. Als eine weitere wesentliche Eigenschaft kann die Oxidationsfunktion zusätzlich zu den vorhergehend genannten Oxidationsreaktionen optional auch in einem zumindest begrenzten Temperaturbereich Stickstoffmonoxid oxidieren, um für die im Abgas enthaltenen Stickstoffoxide ein für nachfolgende Reaktionen günstiges Masseverhältnis einzustellen.
Der Partikelfilter, die Vorrichtung zur katalytischen Oxidation, bzw. der Partikelfilter mit katalytischer Oxidationsfunktion und die mindestens eine Mischkammer sind erfindungsgemäß durch lösbare Verbindungselemente miteinander zu einer baulichen Einheit zusammengefasst. Die bauliche Einheit ist entweder in einem zylindrischen Behälter angeordnet oder bildet einen solchen. Insbesondere ist die bauliche Einheit derart ausgebildet, dass ein einfacher Zugang zum Partikelfilter möglich ist. So kann der zylindrische Behälter, welcher die bauliche Einheit aufnimmt oder gebildet wird, Verbindungsteile in Form von Endteilen aufweisen, welche den zylindrischen Behälter lösbar mit Elementen des Nachbehandlungssystems verbindet, wobei der zylindrische Behälter an dem Abgasstrang aufgenommen wird. Die Endteile können mittels einer Spannvorrichtung oder mittels Schrauben befestigt werden. Durch die lösbare Verbindung des zylindrischen Behälters mit dem Abgasstrang ist das Innere zugänglich, so dass auch einzelne darin aufgenommene Elemente zugänglich sind.

Die mindestens eine Mischkammer ist ausgebildet, um einen von den vorgeschalteten Elementen des Abgasnachbehandlungssystems zugeführten Abgasstrom mit einem Reduktionsmittel zu vermischen, welches von einer Einspritzvorrichtung eingespritzt oder von dieser erzeugt wird.

Die mindestens eine Mischkammer ist insbesondere ausgebildet, um flüssig von der Einspritzvorrichtung zugeführtes Reduktionsmittel, welches in einem sich anschließenden Reduktionskatalysator, insbesondere einem SCR-Katalysator eingesetzt wird, in die Gasphase zu überführen. Ferner ist die mindestens eine Mischkammer derart strukturiert, um Gasphasen und/oder Gas-Flüssigkeitsphasen entlang einer Mischstrecke zu vermischen.

Im Allgemeinen ist der Strömungsweg des Abgases in einem Abgasnachbehandlungssystem aufgrund der Einbauverhältnisse und der anzustrebenden geringen Wärmeverluste beschränkt. Erfindungsgemäß wird dem Abgasstrom durch eine Strukturierung der Mischkammer eine Gesamtweglänge zur Verfügung gestellt, welche länger ist als die Gesamtlänge der mindestens einen Mischkammer. Die Mischkammer kann ein im Wesentlichen röhrenförmiges Element sein, welches den Abgasstrom leitet und ein Vermischen von Abgasstrom und Reduktionsmittel fördert. Die Mischkammer kann eine zylindrische oder andere angemessene Querschnittsform haben, beispielsweise kugelförmig sein. Ferner kann die mindestens eine Mischkammer interne Mischeinrichtungen aufweisen, welche ausgebildet sind, den Abgasstrom und das eingespritzte Reduktionsmittel zu mischen, während die Mischkammer durchströmt wird. Entsprechende Mischeinrichtungen, auch bezeichnet als Strukturen, können in Form von Mischplatten, Mischschaufeln, Blenden oder anderen bekannten Einrichtungen, fungierend als statische Mischer, eingesetzt werden. Auch dynamische Mischvorrichtungen sind denkbar, wobei eine Mehrzahl von Mischeinrichtungen einsetzbar ist. Um eine gute Verteilung des eingespritzten Reduktionsmittels in den Abgasstrom zu erreichen, ist vorgesehen im Inneren der mindestens einen Mischkammer entsprechende Strukturen vorzusehen, welche dem Abgasstrom beispielsweise einen Drehimpuls erteilen, bzw. eine Verwirbelung und/oder eine Turbulenz erzeugen, wobei eine gute Verwirbelung und somit eine gute Verteilung des Reduktionsmittels im Abgasstrom erreicht wird. Die Strukturen können in Form von Führungsflächen ausgebildet sein, welche mindestens eine Schraubenbahn ausbilden, so dass das erzeugte Abgas-/Reduktionsmittelgemisch in einer spiralförmigen Strömung über einen Auslass die Mischkammer verlässt.

Das Reduktionsmittel wird mittels einer Einspritzvorrichtung in den Abgasstrom eingespritzt. Das Reduktionsmittel wird vorzugsweise an einer Position eingespritzt, das beispielsweise von einer Injektionsdüse eingespritzte Reduktionsmittel gleichmäßig im Abgas verteilt und zerstäubt werden kann, während es entlang eines Strömungsweges gefördert wird. Insbesondere sollte aus räumlichen Gründen der Abstand zwischen Einspritzvorrichtung und einem nachgeschalteten Reduktionskatalysator einerseits möglichst klein sein, wobei andererseits allerdings genügend Verweilzeit zur Verfügung stehen muss, um eine zufriedenstellende Verteilung und Zerstäubung des Reduktionsmittels im Abgasstrom zu gewährleisten. Im Falle eines nachgeschalteten Reduktionskatalysators vom SCR-Typ, welcher im Abgas enthaltene Stickstoffoxide unter Nutzung von Reduktionsmittel, beispielsweise Ammoniak, reduziert, kann die Einspritzvorrichtung ausgelegt sein, beispielsweise eine wässrige Harnstofflösung als Vorstufe des Reduktionsmittels einzuspritzen. In diesem Beispiel kann die Einspritzvorrichtung mit einer wässrigen Harnstofflösung mit gegebenem Druck von einem Vorratstank über eine Dosiereinrichtung beaufschlagt werden, welche außerhalb der Mischkammer angeordnet sind. Die Mischkammer ist ausgebildet, um flüssig eingespritztes Reduktionsmittel in die Gasphase zu überführen. Des Weiteren ist die Mischkammer geeignet, Gasströme zu vermischen.

Die Einspritzvorrichtung, beispielsweise in Form von Injektionsdüsen, kann derart an einem die Mischkammer aufnehmenden zylindrischen Behälter angeordnet werden, dass das Reduktionsmittel durch die Einspritzvorrichtung in die Mischkammer in einem radialen Muster in Richtung des äußeren Umfangs injiziert wird. Die mindestens eine Injektionsdüse kann derart ausgerichtet sein, dass das Reduktionsmittel in einem einstellbaren Winkel in Bezug auf einen fiktiven oder realen Auftreffpunkt auf die Wand der Mischkammer eingespritzt wird. Durch das Injizieren des Reduktionsmittels in den heißen Abgasstrom wird das Reduktionsmittel durch die Abgaswärme aufbereitet, welches dessen Wirksamkeit weiter verbessert.

Eine Ausführungsform des erfindungsgemäßen Abgasnachbehandlungssystems umfasst anschließend an die zur baulichen Einheit zusammengefassten Elemente, insbesondere einem Partikelfilter mit katalytischer Oxidationsfunktion und mindestens einer Mischkammer, mindestens eine Einrichtung, insbesondere mindestens einen Katalysator, welche mit der baulichen Einheit in dem Behälter aufgenommen ist oder einen solchen bildet. Bevorzugt handelt es sich um einen Reduktionskatalysator, welcher dem SCR-Typ entspricht, der stromabwärts der mindestens einen Mischkammer angeordnet ist.

In einer beispielhaften Ausführungsform können zusätzlich oder anstatt einem oder mehrerer SCR-Katalysatoren, ein oder mehrere Reinigungskatalysatoren angeordnet sein, wie beispielsweise ein Dieseloxidationskatalysator (DOC-Katalysator) und/oder bevorzugt ein Ammoniakoxidationskatalysator (AMOₓ-Katalysatoren). Derartige Oxidationskatalysatoren können ein geeignetes Material aufweisen, welches mit einem katalysierenden Material beschichtet oder in anderer Weise ein katalysierendes Material enthält, wodurch chemische Reaktionen katalytisch angeregt werden, welche die Zusammensetzung des Abgases verändern. Durch die Anordnung von einem oder mehreren Katalysatoren stromabwärts der mindestens einen Mischkammer kann eine NOₓ- Reduktion weiter fortgeführt und/oder vollendet werden, wobei eine Steigerung der Umwandlungseffizienz des Abgasnachbehandlungssystems erreicht wird. Insbesondere kann eine Begrenzung des Ammoniakanteils im nachbehandelten, austretenden Abgasstrom erreicht werden. Bevorzugt kann ein Katalysator vorgesehen sein, welcher einen ersten katalytisch aktiven Bereich und stromabwärts vom ersten katalytisch aktiven Bereich angeordnet, einen zweiten katalytisch aktiven Bereich aufweist, welcher sich vom ersten katalytisch aktiven Bereich unterscheidet. So kann der erste katalytisch aktive Bereich für ein SCR-Verfahren geeignet sein und der stromabwärts angeordnete zweite katalytisch aktive Bereich eine weitere Oxidationsfunktion katalysieren.

In einer Ausführungsform des erfindungsgemäßen Systems zur Reinigung von Abgas ist neben den in der baulichen Einheit in einem zylindrischen Behälter angeordneten Einrichtungen, d.h. einem Partikelfilter und einer Vorrichtung mit katalytischer Oxidationsfunktion oder alternativ einem Partikelfilter mit katalytischer Oxidationsfunktion und mindestens einer Mischkammer, in der baulichen Einheit mindestens ein Katalysator aufgenommen. So ergibt sich ein äußerst kompaktes Abgasnachbehandlungssystem mit vorzugsweise nur einem einzigen Behälter, in dem mehrere Einrichtungen mit unterschiedlichen Funktionen zusammengefasst sind. Beispielsweise kann das Substrat des mindestens einen Katalysators einen stromaufwärtsliegenden Bereich und einen stromabwärtsliegenden Bereich umfassen, wobei ein SCR-Katalysator auf dem stromaufwärtsliegenden Bereich angeordnet ist und ein Oxidationskatalysator auf dem stromabwärtsliegenden Bereich. In einem weiteren erfindungsgemäßen Abgasnachbehandlungssystems umfasst die bauliche Einheit, angeordnet in einem zylindrischen Behälter, einen Partikelfilter mit katalytischer Oxidationsfunktion, mindestens eine Mischkammer und einen SCR-Katalysator, wobei der zylindrische Behälter zumindest ein entfernbares Endteil aufweist, welches ausgebildet ist, um Zugriff zum Innern des zylindrischen Behälters, vorzugsweise zum Partikelfilter mit katalytischer Oxidationsfunktion zu gewähren. Ein in die bauliche Einheit einströmender Abgasstrom aus einer Verbrennungskraftmaschine wird derart behandelt, dass eine NOₓ-Umwandlungseffizienz zumindest zeitweise von mehr als 50%, bevorzugt von mehr als 90%, besonders bevorzugt von mehr als 95% und am meisten bevorzugt von mehr als 99% erreicht wird. Insbesondere werden entsprechende hohe Effizienzwerte bei günstigen Betriebspunkten der Verbrennungskraftmaschine erreicht.
Des Weiteren wird ein Verfahren zur Behandlung eines Abgasstroms vorgeschlagen, welcher von einer Verbrennungskraftmaschine resultiert, wobei das noch unbehandelte Abgas zwischen etwa 2 g NOₓ/kWh und 12 g NOₓ/kWh aufweist. Der Abgasstrom wird einem System zur Abgasnachbehandlung zugeführt, welches in einer baulichen Einheit einen Partikelfilter mit katalytischer Oxidationsfunktion und mindestens eine Mischkammer umfasst, wobei in dem Abgasstrom vorhandene Schadstoffe katalytisch oxidiert und Partikel mittels des Partikelfilters aus dem Abgasstrom gefiltert werden. Ein derart erzeugter erster behandelter Abgasstrom wird der mindestens einen Mischkammer zugeführt, in welcher der erste behandelte Abgasstrom mit einem eingespritzten Reduktionsmittel zu einem Abgas-/Reduktionsmittelgemisch vermischt wird.
In einer Weiterbildung des Verfahrens wird das Abgas-/Reduktionsmittelgemisch einer Katalysatoreinrichtung zugeführt, wobei ein aus dieser Katalysatoreinrichtung austretender zweiter behandelter Abgasstrom erzeugt wird. Dieser zweite behandelte Abgasstrom kann in einem sich anschließenden Oxidationskatalysator katalytisch behandelt werden, wobei insbesondere das in dem zweiten behandelten Abgasstrom enthaltene Ammoniak katalytisch umgewandelt wird.
Ferner ist das erfindungsgemäße Verfahren eingerichtet, um relevante Parameter des Abgasnachbehandlungssystem zu erfassen und die ermittelten Daten in mindestens einer Steuereinheit auszuwerten, wobei Sensoren und verschiedene Einrichtungen umfasst sind, um beispielsweise Partikelmasse, Partikelanzahl, Abgasdruck, Temperatur, Abgasdurchflussmenge, Reduktionsmittelmenge, Abgaszusammensetzung, Abgaskonzentration und Reduktions- und/oder Oxidationspotential zu ermitteln. Des Weiteren ist eine Methodik für die mindestens eine Steuereinheit vorgesehen, um durch Veränderungen einer Auswahl von Parametern der Verbrennungskraftmaschine und/oder Veränderungen der Parameter des Abgasnachbehandlungssystems, beispielsweise den Abgasdruck, die Temperatur, die Abgasdurchflussmenge, die Reduktionsmittelmenge, die Abgaszusammensetzung, die Abgaskonzentration und das Reduktions- und/oder Oxidationspotential eine Anpassung zu ermöglichen, um einen möglichst effizienten Verfahrensablauf zu ermöglichen.

### Vorteile der Erfindung

Mit der erfindungsgemäß vorgeschlagenen Lösung des Abgasnachbehandlungssystems wird eine bauliche Einheit geschaffen, welche einen verringerten Einbauraum und eine weitere verringerte Gesamtmasse und damit auch eine verringerte Wärmekapazität der Anordnung erzielt. Durch die reduzierte Baugröße eines erfindungsgemäß integrierten Systems kann das temperaturabhängige Anspringverhalten insbesondere bei niedrigen Temperaturen verbessert werden, wobei es zu einem früheren Konvertierungsbeginn kommt. Dies ist insbesondere bei solchen Anwendungen günstig, bei denen Verbrennungskraftmaschinen häufig mit niedrigen Temperaturen betrieben werden. Zusätzlich können die Kosten eines entsprechenden Abgasnachbehandlungssystems im Vergleich zu den bisher bekannten Systemen gesenkt werden, welche sich aufgrund der Vielzahl der Komponenten und deren Anordnung als nachteilig erweisen.

Mit der Ausgestaltung der baulichen Einheit, aufgenommen in einem zylindrischen Behälter, kann auf eine Vielzahl von Behältern verzichtet werden, welche sich aufgrund ihrer Komplexität, der Gesamtgröße des Systems und den Kosten als problematisch erwiesen haben. Ferner kann auf zusätzliche Stützstrukturen zur komplexen Anordnung der einzelnen Elemente verzichtet werden. Durch die von der baulichen Einheit bereitgestellte Kompaktheit, kann das Abgasnachbehandlungssystem in unmittelbarer Nähe oder direkt an einer Verbrennungskraftmaschine angeordnet werden, so dass andernfalls vorzusehende Entkopplungselemente verzichtbar sind oder günstiger gestaltet werden können.

Durch die Möglichkeit, das kompakte Abgasnachbehandlungssystem nahe an der Verbrennungskraftmaschine zu platzieren, werden die Wärmeverluste gegenüber den Anlagen gemäß dem Stand der Technik gering gehalten. Insbesondere hohe Temperaturen in der in der baulichen Einheit integrierten Mischkammer ermöglichen eine zusätzliche Dosierung von Reduktionsmittel in die mindestens eine Mischkammer bei einer dynamischen Betriebsweise der Verbrennungskraftmaschine, welches wiederum zu einer effektiveren Umsetzung der im Abgasstrom enthaltenen Schadstoffe führt. Ferner wird somit das in das heiße Abgas dosierte Reduktionsmittel durch die Abgaswärme weiter aufbereitet, was die Funktion des erfindungsgemäßen Abgasnachbehandlungssystems weiter verbessert.

Vorteilhaft wirken sich auch die mit der Kompaktheit realisierbaren hohen Temperaturen für den Partikelfilter mit katalytischer Oxidationsfunktion aus; so ist beispielsweise die Reaktionsgeschwindigkeit des Sauerstoffs und/oder des Stickstoffdioxids mit den abgeschiedenen Rußpartikeln und den vorhandenen Schadstoffen höher. Es erweisen sich auch das Einleiten und Steuern einer etwaigen thermischen Regeneration des Partikelfilters mit katalytischer Oxidationsfunktion als weniger anspruchsvoll und damit mit weniger Aufwand realisierbar.

Des Weiteren kann die Integration von weiteren katalytisch aktiven Elementen die Umsetzung von im Abgasstrom vorhandenen Bestandteilen verbessern. So lassen sich beispielsweise durch die Oxidation von Stickstoffmonoxid höhere Umsätze in stromabwärts angeordneten Einrichtungen erzielen. Ferner kann eine oxidierende Wirkung des so funktionalisierten Filters gegenüber Kohlenwasserstoffen stromaufwärts vor einem anderen Katalysator, dessen Funktion durch Kohlenwasserstoff negativ beeinflusst wird, diesen Katalysator schützen.

Eine Integration eines zusätzlichen Ammoniakoxidationskatalysators in die Anordnung der Katalysatoren erlaubt eine Oxidation von überschüssigem, als Reduktionsmittel nicht benötigtem Ammoniaks, wodurch die Umweltbeeinträchtigungen und Korrosionsgefahr durch dieses Gas verringert wird.

Mit den erfindungsgemäß aufgenommenen Sensoren, beispielsweise einem Gassensor und/oder einem Temperatursensor, besteht die Möglichkeit einer verbesserten Steuerung der Umsetzung der im Abgas vorhandenen Schadstoffe. Beispielsweise bei einer Steuerung der Umsetzung von Stickstoffoxiden kann die Menge an Reduktionsmittel beeinflusst werden, um eine optimale Umsetzung zu erhalten und andererseits kann die Temperatur geregelt werden, um in einem optimalen Fenster für den Ablauf der katalytischen Aktivität zu bleiben.

Durch eine oder mehrere lösbare Verbindungen zumindest eines Teils des zylindrischen Behälters ist eine Zugänglichkeit zu den einzelnen Elementen gewährleistet, welche entnommen und gereinigt oder ausgetauscht werden können.

### Kurze Beschreibung der Zeichnungen

Weitere Vorteile und Ausführungsformen der erfindungsgemäßen Gegenstände werden durch die Zeichnungen veranschaulicht und in der nachfolgenden Beschreibung näher erläutert.

Es zeigen:
- Figur 1: eine schematische Darstellung einer Verbrennungskraftmaschine mit einem erfindungsgemäßen Abgasnachbehandlungssystem;
- Figur 2: eine perspektivische Ansicht einer Mischkammer;
- Figur 3: eine Draufsicht auf die Mischkammer gemäß Figur 2;
- Figur 4: eine Ansicht einer baulichen Einheit der erfindungsgemäßen Abgasnachbehandlungssystem und
- Figur 5: einen Querschnitt durch ein Ausführungsbeispiel eines erfindungsgemäßen Abgasnachbehandlungssystems.

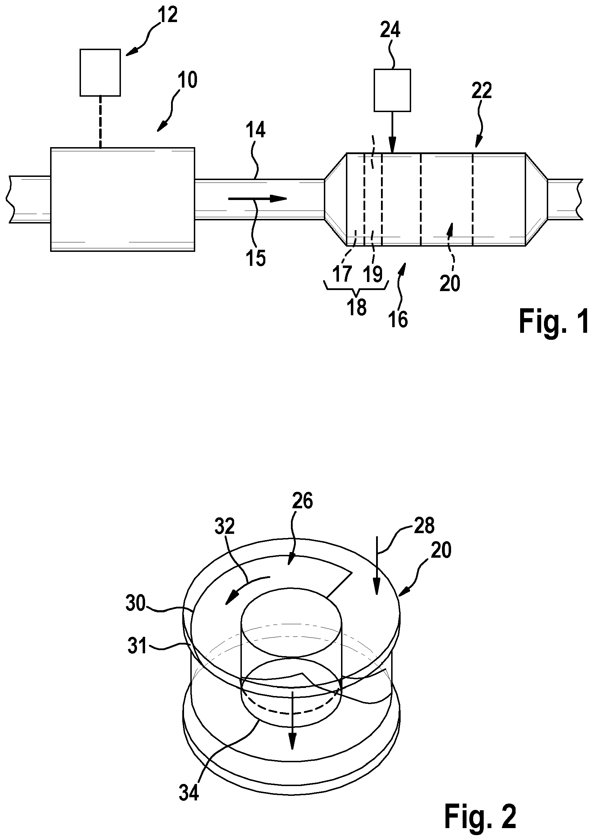

In der Darstellung Figur 1 wird eine Verbrennungskraftmaschine mit 10 bezeichnet, welche von einer schematisch dargestellten Steuereinheit 12 über Signalleitungen gesteuert wird. Abgas wird über einen Abgasstrang 14 entlang eines Strömungswegs 15 abgeleitet, in welchem ein Abgasnachbehandlungssystem 16 angeordnet ist. Das Abgasnachbehandlungssystem 16 umfasst einen in der Figur 1 nur angedeuteten Partikelfilter 17 und eine Vorrichtung mit katalytischer Oxidationsfunktion 19, welche zusammengefasst einen Partikelfilter mit katalytischer Oxidationsfunktion 18 bilden können.

Ferner wird mindestens eine Mischkammer 20 mit dem Partikelfilter mit katalytischer Oxidationsfunktion 18 zu einer baulichen Einheit 22 zusammengefasst dargestellt. Mit dem Partikelfilter mit katalytischer Oxidationsfunktion 18 werden einerseits Partikel aus dem im Abgasstrang 14 strömenden Abgas gefiltert und eine katalytische Oxidationsfunktion an dem in den Partikelfilter mit katalytischer Oxidationsfunktion 18 integrierten Katalysator angeregt.

Die Partikelfilter mit katalytischer Oxidationsfunktion 18 weisen beispielsweise eine Wabenstruktur auf mit einer Vielzahl von Kanälen, die wechselseitig so verschlossen sind, dass das partikelbeladene Abgas durch poröse Wände des Wabenkörpers strömt, wobei die im Wesentlichen durch Kohlenstoff gebildeten Partikel in Poren der Wände abgeschieden werden. Der Partikelfilter mit katalytischer Oxidationsfunktion 18 kann eine entsprechende Beschichtung der Kanäle des Wabenkörpers aufweisen oder aus einer katalytisch aktiven Masse besteht. Eine Regeneration des Partikelfilters mit katalytischer Oxidationsfunktion 18 kann derart realisiert werden, dass eine von dem Oxidationskatalysator angeregte Umwandlung von Stickstoffmonoxid aus dem motorischen Abgas mit Sauerstoff zu Stickstoffdioxid katalysiert erfolgt und der als im Partikelfilter mit katalytischer Oxidationsfunktion 18 abgeschiedene Rußpartikel vorliegende Kohlenstoff mit dem Stickstoffdioxid oxidiert wird. Sowohl Stickstoffdioxid als auch Stickstoffmonoxid werden aus dem Partikelfilter mit katalytischer Oxidationsfunktion 18 ausgetragen und der weiteren Nachbehandlung zugeführt. Bei Oxidation von abgeschiedenen Rußpartikeln mit Sauerstoff vermag der mit der katalytischen Oxidationsfunktion versehene Partikelfilter 18 unvollständig verbrannte Zwischenprodukte, beispielsweise Kohlenstoffmonoxid, zu oxidieren.

In der Figur 1 ist ferner stromabwärts des Partikelfilters mit katalytischer Oxidationsfunktion 18 eine Mischkammer 20 angedeutet, welche zu einer baulichen Einheit 22 zusammengefasst sind. Die bauliche Einheit 22 ist derart beschaffen, dass Abgas, das durch die bauliche Einheit 22 strömt, mit den katalytischen Zentren des Partikelfilters mit katalytischer Oxidationsfunktion 18 in Kontakt kommt und dann der Mischkammer 20 zugeleitet wird. Insbesondere ist die bauliche Einheit 22 als ein zylindrischer Behälter 44 ausgebildet, in welchem der Partikelfilter mit katalytischer Oxidationsfunktion 18 und die Mischkammer 20 zusammengefasst sind.

Eine Einspritzvorrichtung 24 ist derart an der baulichen Einheit 22 angeordnet, dass ein Reduktionsmittel in den Abgasstrom eingespritzt und mit diesem zu einem Abgas-/Reduktionsmittelgemisch vermischt wird. Zum Beispiel kann die Einspritzvorrichtung 24 eine oder mehrere Injektionsdüsen 36 umfassen, welche ausgebildet sind, um Reduktionsmittel in den Abgasstrom und insbesondere in die Mischkammer 20 einzuspritzen. Beispielsweise können die Injektionsdüsen 36 radial am Umfang der baulichen Einheit 22 angeordnet sein. Die Einspritzvorrichtung 24 kann neben Injektionsdüsen 36 eine Fluidquelle und eine Steuereinheit umfassen, welche in Figur 1 nicht dargestellt sind. Das Reduktionsmittel kann z.B. gasförmiger Ammoniak, Ammoniak in wässriger Lösung, wässriger Harnstoff oder irgendein anderes in der Abgastechnik bekanntes Reduktionsmittel sein.

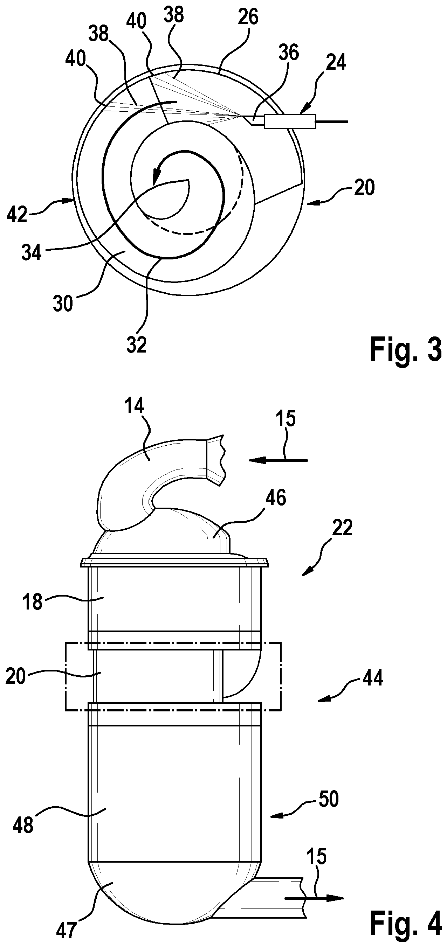

Die Mischkammer 20 ist ausgebildet, um ein Vermischen des eingespritzten Reduktionsmittels mit dem Abgasstrom in der Mischkammer 20 zu verbessern. So kann die Mischkammer 20 Strukturen 26 aufweisen, welche innerhalb der Mischkammer 20 eine Rotationsströmung ausbilden. In Figur 2 ist eine Ausführungsform einer Mischkammer 20 in perspektivischer Ansicht dargestellt. Abgas, welches entlang des Strömungswegs 15 strömt, gelangt zunächst in den Partikelfilter mit katalytischer Oxidationsfunktion 18 und tritt stromabwärts in die Mischkammer 20 ein. In der Mischkammer 20 sind in Fig. 2 Strukturen 26 angedeutet, welche den Strömungsweg 15 des Abgases derart lenken, dass dieser eine bezogen auf eine Hauptströmungsrichtung 28 radiale Ausrichtung einnimmt. Hierfür können die Strukturen 26 Führungsflächen 30 umfassen, welche beispielsweise in Form einer Schraubenbahn ausgebildet sind. Optional sind Führungsflächen 30 an einer oder mehrerer in der Mischkammer 20 aufgenommenen Schalen 31 ausgebildet, wobei dem Abgas eine spiralförmige Strömung 32 Richtung Auslass 34 aus der Mischkammer 20 aufgeprägt wird. Die Hauptströmungsrichtung 28 des eintretenden Abgases wird durch die in der Mischkammer 20 aufgenommenen Strukturen 26 derart blockiert, so dass das Abgas entlang Führungsflächen 30 in einer spiralförmigen Strömung 32 (Figur 3) weitergeleitet wird und durch den Auslass 34 aus der Mischkammer 20 austritt, wobei die Auslassrichtung im Wesentlichen parallel zur Hauptströmungsrichtung 28 gerichtet ist. Durch die Strukturen 26 wird die Weglänge des Strömungswegs 15 des Abgases gegenüber einer Gesamtlänge der Mischkammer 20 erhöht.

Figur 3 zeigt eine Draufsicht auf die Mischkammer 20, wobei die Strukturen 26, ausgebildet als Führungsflächen 30 angedeutet sind. Das in die Mischkammer 20 eintretende Abgas wird durch die Führungsflächen 30 in die spiralförmige Strömung 32 umgelenkt, welche das Abgas entlang einer Spiralbahn Richtung Auslass 34 aus der Mischkammer 20 führt. Ferner ist schematisch die Einspritzvorrichtung 24 für das Reduktionsmittel dargestellt, welche derart am Umfang der Mischkammer 20 angeordnet ist, dass Reduktionsmittel in das Innere der Mischkammer 20 und damit in die spiralförmige Strömung 32 des Abgasstromes eingespritzt wird. Die Einspritzvorrichtung 24 umfasst eine oder mehrere Injektionsdüsen 36, welche derart ausgerichtet sind, dass Reduktionsmittel mit einem einstellbaren Einspritzwinkel 38 in die Mischkammer 20 eingespritzt wird, wobei der spiralförmigen Strömung 32 des Abgases Rechnung getragen wird. Hierbei kann der Einspritzwinkel 38 unterschiedliche Winkel zu einer Tangentialen, angelegt an einem Auftreffpunkt 40 am Umfang 42 der Mischkammer 20.

Derart über die Einspritzvorrichtung 24 von der Injektionsdüse 36 eingespritztes Reduktionsmittel vermischt sich mit dem Abgas und wird während des Durchströmens der Mischkammer 20 mit dem Abgas zu einem Abgas-/Reduktionsmittelgemisch vermischt. Ferner wird durch die Hitze und den Dampf des Abgases eine als Reduktionsmittel eingesetzte wässrige Harnstofflösung hydrolysiert, so dass Ammoniak gebildet wird.

Figur 4 zeigt eine Ansicht der baulichen Einheit 22, in welcher erfindungsgemäß der Partikelfilter mit katalytischer Oxidationsfunktion 18 und die Mischkammer 20 zu der baulichen Einheit 22 zusammengefasst sind. Die bauliche Einheit 22 ist gemäß Figur 4 als ein zylindrischer Behälter 44 ausgebildet, wobei dieser mittels Endteilen 46, 47, beispielsweise ausgebildet mit Flanschverbindungen, mit dem Abgasstrang 14 verschraubt oder verriegelt ist. Somit sind das Innere des zylindrischen Behälters 44, bzw. die darin aufgenommenen Elemente, d.h. der Partikelfilter mit katalytischer Oxidationsfunktion 18 bzw. die Mischkammer 20 zugänglich zur Inspektion und/oder zum Ersetzen der verschiedenen Elemente. Die bauliche Einheit 22 kann auch mittels Kupplungselementen mit dem Abgasstrang verbunden werden, wobei eine oder mehrere Klemmen, Bügel, flexible Rohrstücke und/oder ähnliche Vorrichtungen denkbar sind, um eine entfernbare Verbindung zwischen dem zylindrischen Behälter 44 und anderen Komponenten zu ermöglichen. Figur 4 ist ferner zu entnehmen, dass in der baulichen Einheit 22 eine oder mehrere Katalysatoreinrichtungen 48 des Abgasnachbehandlungssystems 16 aufgenommen sein können. Entsprechende Katalysatoreinrichtungen 48 sind insbesondere ein oder mehrere SCR-Katalysatoren 50, welche stromabwärts der Mischkammer 20 angeordnet sind und als Reinigungskatalysator wirken. Das in der Mischkammer 20 mit dem Abgas vermischte Reduktionsmittel wird zum Reduzieren von Stickstoffoxiden im SCR-Katalysator 50 eingesetzt.

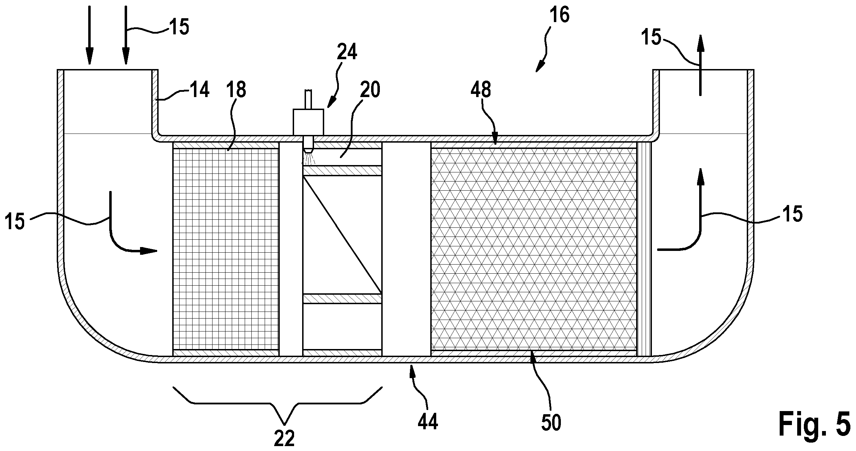

Figur 5 stellt einen Querschnitt eines Ausführungsbeispiels eines erfindungsgemäßen Abgasnachbehandlungssystems 16 dar. Mit Bezugszeichen 15 ist der Strömungsweg des Abgases im Abgasstrang 14 angedeutet, welcher in die bauliche Einheit 22 als unbehandeltes Abgas eintritt und entlang des Strömungsweges 15 den Partikelfilter mit katalytischer Oxidationsfunktion 18, die Mischkammer 20 und die nachgeschaltete Katalysatoreinrichtung 48, vorzugsweise den SCR-Katalysator 50 passiert. Im Bereich der Mischkammer 20 ist die Einspritzvorrichtung 24 angeordnet. In weiteren - nicht dargestellten Ausführungsformen - des Abgasnachbehandlungssystems 16 kann die Katalysatoreinrichtung 48 mehrere weitere gleiche oder unterschiedliche Reinigungskatalysatoren umfassen, so einen SCR-Katalysator 50, einen Dieseloxidationskatalysator (nicht dargestellt), einen Ammoniakoxidationskatalysator (nicht dargestellt). Ferner- ebenfalls nicht dargestellt- kann das Abgasnachbehandlungssystem 16 eine oder mehrere Sonden und/oder Sensoren umfassen, die angeordnet sind, um Betriebscharakteristika und/oder andere Parameter des Abgasnachbehandlungssystems 16 zu überwachen.

## Patentansprüche

1. Abgasnachbehandlungssystem (16) zur Reinigung eines Abgases einer Verbrennungskraftmaschine (10), wobei ein Partikelfilter (17),
eine Vorrichtung mit katalytischer Oxidationsfunktion (19) und mindestens eine Mischkammer (20) zu einer baulichen Einheit (22) zusammengefasst sind, **dadurch gekennzeichnet, dass** der Partikelfilter (17), die Vorrichtung mit katalytischer Oxidationsfunktion (19) oder ein Partikelfilter mit katalytischer Oxidationsfunktion (18) und die mindestens eine Mischkammer (20) lösbar miteinander zu der baulichen Einheit (22) zusammengefasst sind, wobei die bauliche Einheit (22) in einem zylindrischen Behälter (44) angeordnet ist oder einen solchen bildet.

2. Abgasnachbehandlungssystem (16) nach Anspruch 1, **dadurch gekennzeichnet, dass** der Partikelfilter (17) und die Vorrichtung mit katalytischer Oxidationsfunktion (19) zu dem Partikelfilter mit katalytischer Oxidationsfunktion (18) zusammengefasst sind.

3. Abgasnachbehandlungssystem (16) nach Anspruch 1, **dadurch gekennzeichnet, dass** der zylindrische Behälter (44), Endteile (46, 47) aufweist, welche den zylindrischen Behälter (44) lösbar mit Elementen des Abgasnachbehandlungssystems (16) verbinden.

4. Abgasnachbehandlungssystem (16) nach einem der vorherigen Ansprüche 1 bis 3, **dadurch gekennzeichnet, dass** die mindestens eine Mischkammer (20) Strukturen (26) aufweist und ausgebildet ist, um einen zugeführten Abgasstrom mit einem Reduktionsmittel zu einem Abgas-/Reduktionsmittelgemisch zu vermischen, welches von einer Einspritzvorrichtung (24) eingespritzt oder von dieser erzeugt wird.

5. Abgasnachbehandlungssystem (16) nach Anspruch 4, **dadurch gekennzeichnet, dass** die Strukturen (26) der mindestens einen Mischkammer (20) Führungsflächen (30) umfassen, welche das Abgas-/Reduktionsmittelgemisch in einer spiralförmigen Strömung (32) einem Auslass (34) der Mischkammer (20) zuleiten.

6. Abgasnachbehandlungssystem (16) nach einem der vorhergehenden Ansprüche 1 bis 5, **dadurch gekennzeichnet, dass** stromabwärts der mindestens einen Mischkammer (20) mindestens eine Katalysatoreinrichtung (48) angeordnet ist, umfassend mindestens einen SCR-Katalysator, Ammoniakoxidationskatalysator und/oder Dieseloxidationskatalysator.

7. Abgasnachbehandlungssystem (16) nach Anspruch 6, **dadurch gekennzeichnet, dass** die mindestens eine Katalysatoreinrichtung (48) mit der baulichen Einheit (22) in dem zylindrischen Behälter (44) aufgenommen ist oder einen solchen bildet.

8. Abgasnachbehandlungssystem (16) zur Reinigung eines Abgases aus einer Verbrennungskraftmaschine (10), wobei ein Partikelfilter mit katalytischer Oxidationsfunktion (18), mindestens eine Mischkammer (20) und ein SCR-Katalysator (50) zusammengefasst in einem zylindrischen Behälter (44) angeordnet sind, wobei das Abgasnachbehandlungssystem (16) Stickstoffoxide des Abgases, resultierend aus der Verbrennungskraftmaschine (10), zumindest zeitweise mit einer Effizienz von mehr als 50%, bevorzugt von mehr als 90%, besonders bevorzugt von mehr als 95% und am meisten bevorzugt von mehr als 99% umwandelt, **dadurch gekennzeichnet, dass** der Partikelfilter mit katalytischer Oxidationsfunktion (18), die mindestens eine Mischkammer (20) und der SCR-Katalysator (50) lösbar miteinander zusammengefasst sind, wobei der zylindrische Behälter (44) zumindest ein entfernbares Endteil (46, 47) aufweist, das ausgebildet ist, um Zugriff auf den Partikelfilter mit katalytischer Oxidationsfunktion (18) zu gewähren.

9. Abgasnachbehandlungssystem (16) nach Anspruch 8, **dadurch gekennzeichnet, dass** eine zusätzliche Katalysatoreinrichtung (48) zur Begrenzung des Ammoniakgehalts im aus dem Abgasnachbehandlungssystem (16) austretenden Abgasstrom umfasst ist.

10. Verfahren zur Reinigung von Abgas, umfassend folgende Schritte:
- Erzeugen eines Abgases mittels einer Verbrennungskraftmaschine (10), welches zwischen 2 g NOₓ/kWh und 12 g NOₓ/kWh aufweist,
- Leiten des Abgases aus der Verbrennungskraftmaschine (10) zu einem Abgasnachbehandlungssystem (16) gemäß Anspruch 1 bis 7 umfassend einen Partikelfilter mit katalytischer Oxidationsfunktion (18) und mindestens einer Mischkammer (20);
- Katalytisches Oxidieren von Schadstoffen und Abscheiden von Partikeln aus dem Abgas mittels dem Partikelfilter mit katalytischer Oxidationsfunktion (18), wobei ein erstes behandeltes Abgas erzeugt wird; und
- Vermischen des ersten behandelten Abgases mit einem Reduktionsmittel in der mindestens einen Mischkammer (20) zu einem Abgas-/Reduktionsmittelgemisch.

11. Verfahren nach Anspruch 10, **dadurch gekennzeichnet, dass** das Abgas-/Reduktionsmittelgemisch in einer Katalysatoreinrichtung (48) weiter aufbereitet wird, welche stromabwärts der mindestens einen Mischkammer (20) angeordnet ist, wobei die Katalysatoreinrichtung (48) ein zweites behandeltes Abgas erzeugt.

12. Verfahren nach einem der Ansprüche 10 oder 11, **dadurch gekennzeichnet, dass** das Verfahren mittels mindestens einer Steuereinheit (12) in Abhängigkeit einer Auswahl von ermittelten und ausgewerteten Parametern des Abgasnachbehandlungssystems (16) gesteuert wird, umfassend Partikelmasse, Partikelanzahl, Abgasdruck, Temperatur, Abgasdurchflussmenge, Reduktionsmittelmenge, Abgaszusammensetzung, Abgaskonzentration, Reduktions- und/oder Oxidationspotential.

13. Verfahren nach Anspruch 12, **dadurch gekennzeichnet, dass** eine Methodik der mindestens einen Steuereinheit (12) bereitgestellt ist, welche mittels Veränderungen von Parametern der Verbrennungskraftmaschine (10) und/oder Veränderungen der Parameter des Abgasnachbehandlungssystems (16) eine zeitnahe Anpassung ermöglicht, um ein effizientes Verfahren zur Reinigung eines Abgases bereitzustellen.

## Claims

1. Exhaust-gas aftertreatment system (16) for purification of an exhaust gas of an internal combustion engine (10), wherein a particle filter (17), a device with catalytic oxidation function (19) and at least one mixing chamber (20) are combined to form a structural unit (22), **characterized in that** the particle filter (17), the device with catalytic oxidation function (19) or a particle filter with catalytic oxidation function (18) and the at least one mixing chamber (20) are detachably combined with one another to form the structural unit (22), wherein the structural unit (22) is arranged in a cylindrical container (44) or forms a cylindrical container of said type.

2. Exhaust-gas aftertreatment system (16) according to Claim 1, **characterized in that** the particle filter (17) and the device with catalytic oxidation function (19) are combined to form the particle filter with catalytic oxidation function (18).

3. Exhaust-gas aftertreatment system (16) according to Claim 1, **characterized in that** the cylindrical container (44) has end parts (46, 47) which detachably connect the cylindrical container (44) to elements of the exhaust-gas aftertreatment system (16).

4. Exhaust-gas aftertreatment system (16) according to one of the preceding Claims 1 to 3, **characterized in that** the at least one mixing chamber (20) has structures (26) and is designed to mix a supplied exhaust-gas stream with a reducing agent to form an exhaust-gas/reducing-agent mixture, which is injected or generated by an injection device (24).

5. Exhaust-gas aftertreatment system (16) according to Claim 4, **characterized in that** the structures (26) of the at least one mixing chamber (20) comprise guide surfaces (30) which conduct the exhaust-gas/reducing-agent mixture in a spiral-shaped flow (32) to an outlet (34) of the mixing chamber (20).

6. Exhaust-gas aftertreatment system (16) according to one of the preceding Claims 1 to 5, **characterized in that**, downstream of the at least one mixing chamber (20), there is arranged at least one catalytic converter device (48) comprising at least one SCR catalytic converter, ammonia oxidation catalytic converter and/or diesel oxidation catalytic converter.

7. Exhaust-gas aftertreatment system (16) according to Claim 6, **characterized in that** the at least one catalytic converter device (48), together with the structural unit (22), is received in the cylindrical container (44) or forms a cylindrical container of said type.

8. Exhaust-gas aftertreatment system (16) for purification of an exhaust gas from an internal combustion engine (10), wherein a particle filter with catalytic oxidation function (18), at least one mixing chamber (20) and an SCR catalytic converter (50) are arranged so as to be combined in a cylindrical container (44), wherein the exhaust-gas aftertreatment system (16) at least intermittently converts nitrogen oxides of the exhaust gas resulting from the internal combustion engine (10) with an efficiency of more than 50%, preferably of more than 90%, particularly preferably of more than 95% and most preferably of more than 99%, **characterized in that** the particle filter with catalytic oxidation function (18), the at least one mixing chamber (20) and the SCR catalytic converter (50) are detachably combined with one another, wherein the cylindrical container (44) has at least one removable end part (46, 47) which is designed to allow access to the particle filter with catalytic oxidation function (18).

9. Exhaust-gas aftertreatment system (16) according to Claim 8, **characterized in that** it comprises an additional catalytic converter device (48) for limiting the ammonia content in the exhaust-gas stream emerging from the exhaust-gas aftertreatment system (16).

10. Method for purification of exhaust gas, comprising the following steps:
- generating, by means of an internal combustion engine (10), an exhaust gas which has between 2 g NOₓ/kWh and 12 g NOₓ/kWh,
- conducting the exhaust gas from the internal combustion engine (10) to an exhaust-gas aftertreatment system (16) according to Claim 1 to 7 comprising a particle filter with catalytic oxidation function (18) and at least one mixing chamber (20);
- catalytically oxidizing pollutants and separating off particles from the exhaust gas by means of the particle filter with catalytic oxidation function (18), wherein a first treated exhaust gas is generated; and
- mixing the first treated exhaust gas with a reducing agent in the at least one mixing chamber (20) to form an exhaust-gas/reducing-agent mixture.

11. Method according to Claim 10, **characterized in that** the exhaust-gas/reducing-agent mixture is prepared further in a catalytic converter device (48) which is arranged downstream of the at least one mixing chamber (20), wherein the catalytic converter device (48) generates a second treated exhaust gas.

12. Method according to either of Claims 10 and 11, **characterized in that** the method is controlled by means of at least one control unit (12) in a manner dependent on a selection of determined and evaluated parameters of the exhaust-gas aftertreatment system (16), comprising particle mass, particle count, exhaust-gas pressure, temperature, exhaust-gas throughflow rate, reducing agent flow rate, exhaust-gas composition, exhaust-gas concentration, reduction and/or oxidation potential.

13. Method according to Claim 12, **characterized in that** a methodology of the at least one control unit (12) is provided which, by means of changes to parameters of the internal combustion engine (10) and/or changes to parameters of the exhaust-gas aftertreatment system (16), permits a realtime adaptation in order to provide an efficient method for purification of an exhaust gas.

## Revendications

1. Système de post-traitement des gaz d'échappement (16) destiné à purifier un gaz d'échappement d'un moteur à combustion interne (10), un filtre à particules (17), un dispositif avec fonction d'oxydation catalytique (19) et au moins une chambre de mélange (20) étant regroupés pour former une unité structurelle (22), **caractérisé en ce que** le filtre à particules (17), le dispositif avec fonction d'oxydation catalytique (19) ou un filtre à particules avec fonction d'oxydation catalytique (18) et l'au moins une chambre de mélange (20) sont regroupés de manière amovible les uns aux autres pour former l'unité structurelle (22), l'unité structurelle (22) étant disposée dans un récipient cylindrique (44) ou en formant un.

2. Système de post-traitement des gaz d'échappement (16) selon la revendication 1, **caractérisé en ce que** le filtre à particules (17) et le dispositif avec fonction d'oxydation catalytique (19) sont regroupés pour former le filtre à particules avec fonction d'oxydation catalytique (18).

3. Système de post-traitement des gaz d'échappement (16) selon la revendication 1, **caractérisé en ce que** le récipient cylindrique (44) possède des parties d'extrémité (46, 47) qui relient le récipient cylindrique (44) de manière amovible avec des éléments du système de post-traitement des gaz d'échappement (16).

4. Système de post-traitement des gaz d'échappement (16) selon l'une des revendications précédentes 1 à 3, **caractérisé en ce que** l'au moins une chambre de mélange (20) possède des structures (26) et elle est configurée pour mélanger un flux de gaz d'échappement acheminé avec un agent réducteur pour former un mélange gaz d'échappement/agent réducteur, lequel est injecté par un dispositif d'injection (24) ou généré par celui-ci.

5. Système de post-traitement des gaz d'échappement (16) selon la revendication 4, **caractérisé en ce que** les structures (26) de l'au moins une chambre de mélange (20) comprennent des surfaces de guidage (30) qui acheminent le mélange gaz d'échappement/agent réducteur en un courant en forme de spirale (32) à une sortie (34) de la chambre de mélange (20).

6. Système de post-traitement des gaz d'échappement (16) selon l'une des revendications précédentes 1 à 5, **caractérisé en ce qu'**au moins un appareil catalyseur (48) est disposé en aval de l'au moins une chambre de mélange (20), comprenant au moins un catalyseur à RCS, un catalyseur d'oxydation d'ammoniac et/ou un catalyseur d'oxydation de diesel.

7. Système de post-traitement des gaz d'échappement (16) selon la revendication 6, **caractérisé en ce que** l'au moins un appareil catalyseur (48) est accueilli avec l'unité structurelle (22) dans le récipient cylindrique (44) ou en forme un.

8. Système de post-traitement des gaz d'échappement (16) destiné à purifier un gaz d'échappement d'un moteur à combustion interne (10), un filtre à particules avec fonction d'oxydation catalytique (18), au moins une chambre de mélange (20) et un catalyseur à RCS (50) étant regroupés dans un récipient cylindrique (44), le système de post-traitement des gaz d'échappement (16) convertissant des oxydes d'azote des gaz d'échappement, qui résultent du moteur à combustion interne (10), au moins périodiquement avec une efficacité de plus de 50 %, de préférence supérieure à 90 %, notamment de préférence supérieure à 95 %, et plus préférablement supérieure à 99 %, **caractérisé en ce que** le filtre à particules avec fonction d'oxydation catalytique (18), l'au moins une chambre de mélange (20) et le catalyseur à RCS (50) sont regroupés de manière amovible les uns aux autres, le récipient cylindrique (44) possédant au moins une partie d'extrémité (46, 47) détachable qui est configurée pour autoriser l'accès au filtre à particules avec fonction d'oxydation catalytique (18).

9. Système de post-traitement des gaz d'échappement (16) selon la revendication 8, **caractérisé en ce qu'**un appareil catalyseur supplémentaire (48) destiné à limiter la teneur en ammoniac dans le flux de gaz d'échappement sortant du système de post-traitement des gaz d'échappement (16) est compris.

10. Procédé de purification des gaz d'échappement, comprenant les étapes suivantes :
- génération d'un gaz d'échappement au moyen d'un moteur à combustion interne (10), lequel présente entre 2 g de NOx/kWh et 12 g de NOx/kWh ;
- acheminement du gaz d'échappement issus du moteur à combustion interne (10) à un système de post-traitement des gaz d'échappement (16) selon l'une des revendications 1 à 7, comprenant un filtre à particules avec fonction d'oxydation catalytique (18) et au moins une chambre de mélange (20) ;
- oxydation catalytique des substances nocives et séparation de particules du gaz d'échappement au moyen du filtre à particules avec fonction d'oxydation catalytique (18), un premier gaz d'échappement traité étant ainsi produit ; et
- mélange du premier gaz d'échappement traité avec un agent réducteur dans l'au moins une chambre de mélange (20) pour former un mélange gaz d'échappement/agent réducteur.

11. Procédé selon la revendication 10, **caractérisé en ce que** le mélange gaz d'échappement/agent réducteur est soumis à un conditionnement supplémentaire dans un appareil catalyseur (48), lequel est disposé en aval de l'au moins une chambre de mélange (20), l'appareil catalyseur (48) produisant un deuxième gaz d'échappement traité.

12. Procédé selon l'une des revendications 10 ou 11, **caractérisé en ce que** le procédé est mis en oeuvre au moyen d'au moins une unité de commande (12) en fonction d'une sélection de paramètres déterminés et interprétés du système de post-traitement des gaz d'échappement (16), comprenant la masse de particules, le nombre de particules, la pression des gaz d'échappement, la température, le débit volumique des gaz d'échappement, la quantité d'agent réducteur, la composition des gaz d'échappement, la concentration des gaz d'échappement, le potentiel de réduction et/ou d'oxydation.

13. Procédé selon la revendication 12, **caractérisé en ce qu'**une méthodologie de l'au moins une unité de commande (12) est mise à disposition, laquelle permet une adaptation rapide au moyen de modifications de paramètres du moteur à combustion interne (10) et/ou de modifications des paramètres du système de post-traitement des gaz d'échappement (16) afin de mettre à disposition un procédé efficace de purification de gaz d'échappement.
